# EUROPÄISCHE PATENTSCHRIFT

(11) **EP 2 478 808 B1**
(45) Veröffentlichungstag und Bekanntmachung des Hinweises auf die Patenterteilung: **29.04.2015**
(21) Anmeldenummer: 12150128.2
(22) Anmeldetag: 04.01.2012
(51) Int. Cl.: A47J 43/044

(54) **Vorrichtung zum Aufschäumen von Milch**
Device for foaming milk
Dispositif de moussage de lait

(30) Priorität: 21.01.2011 DE 202011001811 U
(43) Veröffentlichungstag der Anmeldung: 25.07.2012
(73) Patentinhaber: Breust, Volker, 24105 Kiel (DE)
(72) Erfinder: Breust, Volker, 24105 Kiel (DE)
(74) Vertreter: Raffay & Fleck

(56) Entgegenhaltungen:
- US-A- 1 926 910
- US-A1- 2005 029 685

## Beschreibung

Die vorliegende Erfindung betrifft eine Vorrichtung zum Aufschäumen von Milch mit den Merkmalen des Oberbegriffs des Anspruchs 1.

Aufgeschäumte Milch ist ein wesentlicher Bestandteil für die Zubereitung von mit Milch versetzten Kaffeegetränken wie z. B. Cappuccino, Latte Macchiato und dergleichen. Sie wird aber auch als Zusatz für andere Getränke, beispielsweise Tee verwendet, für die Zubereitung von Kakao genutzt oder einfach pur genossen. Insbesondere für die Verwendung aufgeschäumter Milch zum Verfeinern bzw. zum Zubereiten von Heißgetränken wird der Milchschaum aus erwärmter bzw. erhitzter Milch gebildet.

Milch im Sinne dieser Erfindung ist dabei nicht nur als tierisches Produkt wie insbesondere Kuhmilch, aber auch Ziegenmilch, Schafsmilch, Milch von Pferden und dergleichen zu verstehen, sondern soll auch auf pflanzlicher Basis hergestellte Milchersatzprodukte, wie insbesondere Sojamilch oder Reismilch, erfassen, die ebenfalls, wenn auch mit unterschiedlichem Erfolg aufgeschäumt werden können.

Neben Vorrichtungen, bei denen Milch durch Einleiten von heißem Wasserdampf zugleich erhitzt und aufgeschäumt wird und die häufig an Espressomaschinen bzw. Kaffeevollautomaten zu finden sind, gibt es solche Vorrichtungen, die die Milch mit rotierenden Aufschäumelementen, vergleichbar mit einem Quirl, mit Luft versetzen und so aufschäumen. Solche Geräte sind insbesondere als handgehaltene Geräte bekannt, wie sie z. B. in der DE 202 05 449 U1bzw. der DE 20 2008 016 164 U1 und der US 2005/029685 A1 beschrieben sind.

Mit derartigen handgehaltenen Geräten wird typischerweise Milch, die zuvor in einem geeigneten Gefäß auf einem Herd, in einer Mikrowelle oder in anderer geeigneter Weise erhitzt worden ist, aufgeschäumt, bis ein gewünschter Grad der Schaumbildung erreicht worden ist, mit dem der Milchschaum für die weiteren Zwecke verwendet werden kann.

Grundsätzlich erhält eine mit solchen quirlähnlichen Vorrichtungen aufgeschäumte Milch eine für die Verwendung bessere Konsistenz des Milchschaumes gegenüber solchem Milchschaum, der durch die Einleitung von heißem Dampf in Milch erzeugt worden ist.

Allerdings bringen die vorbekannten handgehaltenen Vorrichtungen zum Aufschäumen von Milch auch Nachteile mit sich:
So muss zunächst die Person, die die Milch aufschäumen möchte, das Gerät bzw. die Vorrichtung zum Aufschäumen von Milch während des gesamten Schäumvorgangs in das Gefäß mit der erwärmten Milch halten und kann somit während dieser Zeit keine anderen Tätigkeiten ausführen, derer es z. B. für die Zubereitung des mit dem Milchschaum zu versetzenden Getränkes bedarf. Ferner wird typischerweise die Milch zunächst ohne Einsatz der handgehaltenen Vorrichtung erhitzt, wobei hier die Gefahr des Anbrennens bzw. Ansetzens der Milch am Boden des Gefäßes besteht, insbesondere wenn dies auf einem Herd geschieht. Häufig muss die Milch während dieser Erhitzungsphase zusätzlich im dem Gefäß bewegt, also umgerührt, werden um ein solches Ansetzen zu verhindern.

Auch hier muss die Person, die die aufgeschäumte warme Milch zubereiten möchte, entsprechend den Vorgang beaufsichtigen und ist mithin mit Ihrer Aufmerksamkeit und Ihrer Tätigkeit gebunden.

Hier soll mit der Erfindung Abhilfe geschaffen werden, indem eine Vorrichtung zum Aufschäumen von Milch angegeben wird, die einen Milchschaum in einer mit aus dem Stand der Technik wie oben beschrieben bekannten Geräten zu erzeugenden Qualität erbringt, der Bedienperson die Handhabung jedoch erleichtert und weniger Aufmerksamkeit erfordert.

Diese Aufgabe wird gelöst durch eine Vorrichtung zum Aufschäumen von Milch mit den Merkmalen des Anspruchs 1. Vorteilhafte Weiterbildungen dieser Vorrichtung sind in den abhängigen Ansprüchen 2 bis 14 spezifiziert.

Die wesentliche Idee der Erfindung besteht nun darin, eine Vorrichtung zum Aufschäumen von Milch mit einem zur Rotation angetriebenen Aufschäumelement, bei dem ein Motor zum Antreiben der Antriebswelle, mit der das Aufschäumelement gekoppelt ist, in einem Gehäuse angeordnet ist, so zu gestalten, dass es mit dem Gehäuseende, an dem das Aufschäumelement angeordnet ist, nach unten fest abgestellt werden kann, wobei sich in dieser Position das Aufschäumelement frei drehen kann und die Rotationsachse, um die das Aufschäumelement dreht, gegenüber der Vertikalen geneigt verläuft.

In einer solchen Ausgestaltung kann die erfindungsgemäße Vorrichtung nämlich mit dem Aufschäumelement in einer unteren Position in dem Gefäß, in welchem die aufzuschäumende Milch befindlich ist, abgestellt werden, während das Aufschäumelement angetrieben durch den Motor rotiert und ein Aufschäumen der Milch bewirkt. Durch die erfindungsgemäße Neigung der Rotationsachse gegenüber der Vertikalen, bei der die Rotationsachse insbesondere deutlich von der Horizontalen abweicht, wird verhindert, dass bei rotierendem Aufschäumelement ein Sog erzeugt wird, der dieses in Richtung des Gefäßbodens zieht. Vielmehr wird in dem Gefäß, in welchem sich die aufzuschäumende Milch befindet, eine entlang des Gefäßbodens verlaufende Strömung erzeugt, die neben der aufschäumenden Wirkung des Aufschäumelementes eine gute Durchmischung der in dem Gefäß befindlichen Milch besorgt und so zu der Bildung eines in der Konsistenz hervorragenden Milchschaumes beiträgt.

Die erfindungsgemäße Vorrichtung kann dabei insbesondere bereits mit rotierendem Aufschäumelement in das Gefäß mit kalter Milch eingestellt werden, um während des Erwärmens der Milch zugleich für eine Bewegung derselben in dem Gefäß zu sorgen und so ein Ansetzen bzw. Anbrennen derselben zu verhindern. Neben dem Aufschäumen besorgt die erfindungsgemäße Vorrichtung somit auch das ansonsten während des Erhitzungsvorganges insbesondere auf einem Herd erforderliche Umrühren der Milch für eine gleichmäßige Erwärmung.

Die Neigung der Rotationsachse zur Vertikalen ist bevorzugt kleiner oder gleich 45°. Auf diese Weise wird verhindert, dass bei einer weiter geneigten Stellung der Rotationsachse zu beobachtendes Spritzen der mit dem Aufschäumelement bewegten Milch auftritt. Bevorzugt ist der Neigungswinkel der Rotationsachse gegenüber der Vertikalen in der auf die Stützmittel abgestellten Position deutlich kleiner als 45°, liegt insbesondere zwischen 5° und 20°, besonders bevorzugt zwischen 10° und 15°, wobei sich eine Neigung von etwa 13° als besonders geeignet herausgestellt hat. Bei einer solchen Neigung ist der Effekt der Durchmischung, wie er oben beschrieben worden ist und der das Schaumergebnis positiv beeinflusst noch zu erreichen, wobei die Schrägstellung der Rotationsachse und damit Verkippung des Aufschäumelementes gering genug gehalten wird um andererseits Spritzerbildung so weit als möglich zu verhindern und andererseits auch Milch bei nur geringer Füllstandshöhe in dem Gefäß zuverlässig aufschäumen zu können. Sofern die Füllstandshöhe der Milch derart gering ist, dass auch bei solchermaßen geneigter Rotationsachse ein Teil des Aufschäumelementes noch aus der in dem Gefäß befindlichen Milch herausragt und die Vorrichtung so bei Betrieb zum Spritzen neigt, kann es sich anbieten, bis zu einer ausreichenden Volumenvergrößerung durch die Bildung eines Anfangsschaumes die Vorrichtung zunächst mit im wesentlichen entlang der Vertikalen ausgerichteter Rotationsachse handgehalten in das Gefäß einzubringen und dann, bei Erreichen eines gewissen Anfangsvolumens des Schaumes auf den Stützmitteln in der erfindungsgemäß geneigten Weise abzustellen.

Das Gehäuse ist mit Vorteil ein langgestrecktes, damit dieses auch nach der Bildung des Schaumes mit einem von einer Bedienperson noch ausreichend griffig zu erreichenden Ende aus dem Milchschaum herausragt. Dabei kann das Gehäuse insbesondere einen im Wesentlichen kreisförmigen Querschnitt aufweisen, wobei dieser Querschnitt bei einem langgestreckten Gehäuse nicht der einzig mögliche ist. Ebenso gut können auch eckige oder andersförmige Querschnitte (oval oder dergleichen) gewählt werden.

Als eine gut handhabbare und in der Praxis bewährte Länge des Gehäuses in seiner Längserstreckung hat sich dabei eine solche von 10 bis 20 cm herausgestellt.

Praktischerweise kann das Gehäuse zusätzlich zu dem Motor eine Energiequelle für die Energieversorgung des Motors aufnehmen bzw. ist eine solche Energiequelle in dem Gehäuse angeordnet, wobei als Energiequelle bevorzugt eine Batterie bzw. mehrere Batterien oder ein oder mehrere Akkumulator(en) gewählt werden.

Für eine einfache Reinigung der Vorrichtung nach Gebrauch ist es von Vorteil, wenn das Aufschäumelement einfach aus seiner Kopplung mit der Antriebswelle zu lösen ist. Eine besonders einfache und leicht zu reinigende und zu bedienende Variante ergibt sich, wenn an dem ersten Gehäuseende das Gehäuse einen zylinderförmigen Gehäuseabschnitt aufweist, in welchem im Gehäuseinneren die Antriebswelle verläuft und in dem auf der Antriebswelle Mitnehmermagnete festgelegt sind. Das Aufschäumelement weist bei dieser Variante eine kreisförmige Aussparung zum Aufsetzen auf den zylinderförmigen Gehäuseabschnitt auf und an der kreisförmigen Aussparung Koppelmagnete zum Koppeln an die Mitnehmermagnete. Auf diese Weise ist der Antriebsmotor mit der Antriebswelle insgesamt in dem Gehäuse gekapselt durch den zylinderförmigen Gehäuseabschnitt. Das Aufschäumelement läuft auf der Außenseite des Gehäuseabschnittes um diesen herumrotierend und mit der Antriebswelle durch die magnetische Anziehungskraft zwischen Mitnehmermagneten und Koppelmagneten gekoppelt. Für eine Reinigung oder aber einen möglicherweise erforderlichen Austausch des Aufschäumelementes kann dieses einfach unter Überwindung der magnetischen Koppelkräfte von dem zylinderförmigen Gehäuseabschnitt abgezogen werden. Zum Reinigen kann das Aufschäumelement dann z. B. unter fließendem Wasser abgespült werden, der restliche Teil der Vorrichtung, insbesondere der Bereich des Gehäuses, der mit der Milch bzw. dem Milchschaum in Berührung gekommen ist, kann ebenfalls einer einfachen Reinigung (Abspülen mit Wasser, Abwischen mit einem Lappen oder dergleichen) unterzogen werden.

Als Stützmittel kommen verschiedentliche Möglichkeiten in Betracht. Die Stützmittel können sich insgesamt in einem einzigen an dem Gehäuse angeformten bzw. an diesem angeordneten Abschnitt verkörpern, der z. B. eine durchgehende Auflagefläche mit einer Neigung gegenüber der Rotationsachse entsprechend deren Neigung gegenüber der Horizontalen umfassen.

Eine mit vergleichsweise geringem Materialeinsatz mögliche und zugleich eine Vielzahl von gestalterischen Optionen eröffnende Möglichkeit, die Stützmittel auszubilden, besteht darin, dass die Stützmittel zwei um die Rotationsachse versetzt angeordnete, an dem Gehäuse angeformte Stützstreben beinhaltet. Für die vollständige und sichere Abstützung der Vorrichtung in der auf den Stützmitteln abgestellten Position kann es sich anbieten, dass die Stützmittel weiterhin einen äußeren Abschnitt des zylinderförmigen Gehäuseabschnittes umfassen. So ergibt sich eine Dreipunktauflage, die bei entsprechender Ausrichtung der Stützstreben einen sehr sicheren Stand ergibt, auch dann, wenn das Aufschäumelement rotiert und dadurch auf die Vorrichtung wirkende Gegenkräfte erzeugt.

Die Standsicherheit kann insbesondere dann erreicht werden, wenn die Stützstreben um die Rotationsachse um einen Winkel von 45° bis 75° versetzt sind.

Um zu verhindern, dass bei nahe an den Gefäßrand herangerückter, in dem Gefäß abgestellter Vorrichtung das Aufschäumelement mit dem Gefäßrand kollidiert und somit in seiner freien Rotation behindert wird, kann im Bereich des ersten Gehäuseendes ein kragenartiger Vorsprung vorgesehen sein, der über den äußeren Rand des Aufschäumelementes hinausragt. Im Falle von zwei an dem Gehäuse geformten Stützstreben erstreckt sich dieser kragenartige Vorsprung jedenfalls in den dem Winkelabschnitt zwischen den Stützstreben gegenüberliegenden Bereich.

Grundsätzlich kann das Aufschäumelement ein beliebiges zum Aufschäumen der Milch geeignetes sein. Bevorzugt wird hier ein solches mit einer in einer im Wesentlichen senkrecht zu der Rotationsebene liegenden Ebene kreisförmig angeordneten Spirale, wie es grundsätzlich aus dem oben bereits bezeichneten Stand der Technik bekannt ist.

Eine weitere Verbesserung des Gebrauchskomforts erfährt die erfindungsgemäße Vorrichtung dadurch, dass sie in einer vorteilhaften Ausgestaltung einen an dem ersten Gehäuseende angeordneten Temperatursensor aufweisen kann sowie Mittel zum Anzeigen einer mit dem Temperatursensor gemessenen Temperatur. Als Mittel zum Anzeigen einer mit dem Temperatursensor gemessenen Temperatur ist hier nicht allein eine die entsprechende Temperaturskala wiedergebende Anzeige (eine Digitalanzeige oder eine Analoganzeige) gemeint, vielmehr sind hiermit auch solche Anzeige- bzw. Benachrichtigungsmittel erfasst, die dem Verwender das Erreichen einer bestimmten Temperatur anzeigen, z. B. eine optische Anzeige in Form einer Lampe bzw. einer LED, die aufleuchtet, wenn der Temperatursensor eine Temperatur der aufzuschäumenden Milch bzw. des Milchschaums misst, die einen voreingestellten Schwellwert überschreitet. In gleicher Weise kann diese Anzeige anstelle einer optischen Signaleinrichtung eine akustische Signaleinrichtung enthalten, die einen Ton oder eine Tonabfolge erklingen lässt, wenn der Temperatursensor eine die voreingestellte Temperatur überschreitende Temperatur wahrnimmt.

Versuche des Erfinders haben nämlich gezeigt, dass die ideale Konsistenz des Milchschaumes erreicht werden kann, wenn die Milch bzw. der Milchschaum eine Temperatur in einer Größenordnung von 70 bis 80°C hat. Darüber hinaus ist diese Temperatur auch ausreichend hoch, um den Milchschaum für die Zubereitung von Heißgetränken weiter zu verwenden, ohne dass diese (z. B. ein mit Milchschaum zu einem Cappuccino zu veredelnder Espresso) zu stark erkalten. Durch den Temperatursensor in Verbindung mit den Mitteln zum Anzeigen der Temperatur kann eine Bedienperson die erfindungsgemäße Vorrichtung während der Erwärmphase mit rotierendem Aufschäumelement in ein Gefäß zunächst noch kalter Milch einstellen und sich den weiteren erforderlichen Tätigkeiten zuwenden. Während des Erwärmens der Milch wird diese bereits aufgeschäumt, die Temperaturanzeige wird die Bedienperson auf das Erreichen der richtigen Temperatur aufmerksam machen, sodass sie das Gefäß mit dem dann optimalen und die richtige Temperatur aufweisenden Milchschaum hernehmen und den Milchschaum weiter verwenden kann.

Das Gehäuse der Vorrichtung besteht, jedenfalls ein einem überwiegenden Abschnitt vorzugsweise aus Metall oder einer Metalllegierung. Dies bringt der Vorrichtung nicht nur eine besondere und gute Stabilität, vielmehr wird das Metallgehäuse wegen der guten thermischen Leiteigenschaften des Metalls die aus der erwärmten Milch bzw. dem erhitzten Milchschaum aufgenommene Temperatur zügig abführen und über seinen mit der Umgebungsluft in Berührung stehenden Abschnitt an diese Umgebungsluft abgeben, sodass die in dem Gehäuse angeordneten Komponenten, insbesondere der Motor, aber auch andere Teile, zuverlässig vor einer Überhitzung geschützt sind.

Weitere Vorteile und Merkmale der Erfindung ergeben sich aus der nachfolgenden Beschreibung eines Ausführungsbeispiels anhand der beigefügten Figuren. Dabei zeigen:
- Figur 1: eine erfindungsgemäße Vorrichtung in einer für den Betrieb aufgestellten Position in Seitenansicht
- Figur 2: eine Darstellung der Vorrichtung gemäß Figur 1 in derselben Stellung, jedoch in einem Längsschnitt, und

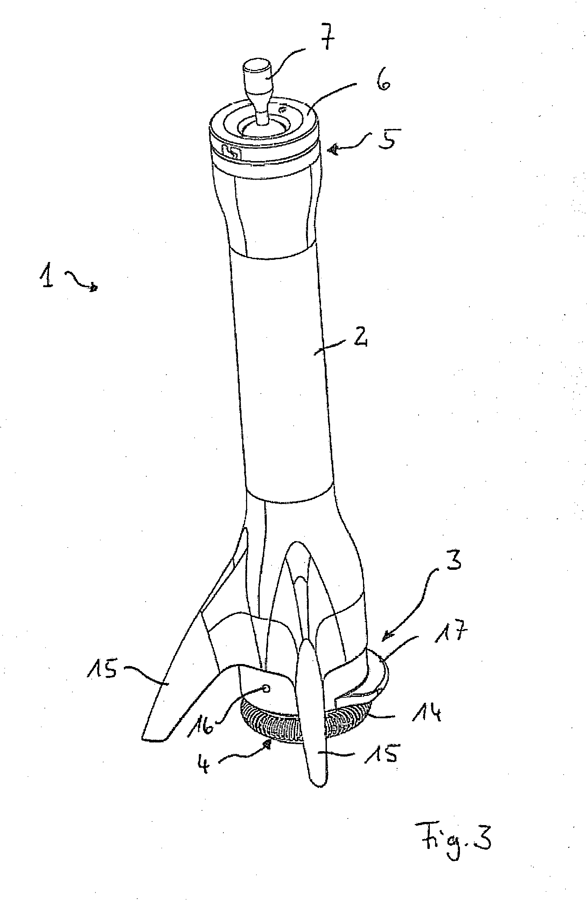

- Figur 3: die erfindungsgemäße Vorrichtung in einer dreidimensionalen Ansicht in einer Position für den Betrieb.

In den Figuren ist ein exemplarisches Ausführungsbeispiel der Erfindung gezeigt und wird nachfolgend beschrieben, wobei dieses Ausführungsbeispiel lediglich eine Variante zur Verwirklichung der Erfindung darstellt, die zum besseren Verständnis der Erfindung hier näher und eingehender beschrieben wird.

Die in den Figuren mit dem Bezugszeichen 1 bezifferte Vorrichtung zum Aufschäumen von Milch enthält ein Gehäuse 2, welches langgestreckt und gerade verläuft und dabei dem Gehäuse einer typischen Stabtaschenlampe ähnelt. Das Gehäuse 2 ist bei der hier gezeigten Vorrichtung aus Metall gefertigt, vorzugsweise aus Zinkdruckguss bzw. gesintertem Zink, wobei auf der Außenseite das Zink einerseits zur Verbesserung der Optik andererseits zur Verbesserung der Korrosionsbeständigkeit und für die Lebensmittelechtheit hier verchromt ist.

An einem ersten Gehäuseende 3 ist außerhalb des Gehäuses ein Aufschäumelement 4 angeordnet. Auf der dem ersten Gehäuseende gegenüberliegenden Seite weist das Gehäuse 2 ein zweites Gehäuseende 5 auf, welches durch eine aufschraubbare Verschlusskappe 6 verschlossen ist. An der Verschlusskappe 6 ist ein Kippschalter 7 angeordnet. Im Bereich des ersten Gehäuseendes 3 ist hier ein eigenständiger Gehäuseabschnitt mit dem ansonsten im mittleren Abschnitt einstückigen Gehäuse 2 verbunden, wobei dieser Abschnitt auch aus einem abweichenden Material, z.B. Kunststoff, bestehen kann.

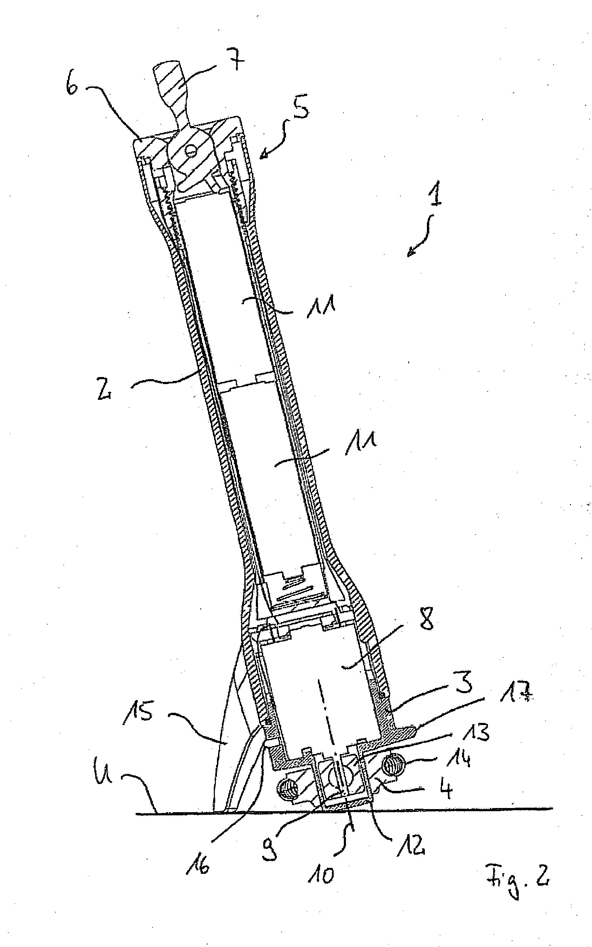

Innerhalb des Gehäuses 2 ist im Bereich des ersten Gehäuseendes 3 ein Motor 8 (vgl. Figur 2) angeordnet, der eine Antriebswelle 9 zur Rotation um eine Rotationsachse 10 antreibt. Der Motor 8 wird über Batterien bzw. Akkumulatoren 11, die sich ebenfalls innerhalb des Gehäuses 2 befinden, mit elektrischer Energie versorgt. Zum Ein- bzw. Ausschalten des Motors 8 dient der Kippschalter 7, der den elektrischen Kontakt zwischen den Batterien und dem Motor öffnet bzw. schließt.

Das Aufschäumelement 4 ist im Wesentlichen kreisringförmig mit einer im Zentrum angeordneten Öffnung gebildet. Die Öffnung im Zentrum des Aufschäumelementes 4 ist derart dimensioniert, dass sie über einen zylinderförmigen Gehäuseabschnitt 12 im Bereich des ersten Gehäuseendes 3 geführt werden kann, wobei ausreichendes Spiel verbleibt, dass sich das Aufschäumelement 4 um den zylinderförmigen Gehäuseabschnitt 12 drehend bewegen kann. Im Innern des Gehäuseabschnittes 12 erstreckt sich die Antriebswelle 9, ohne das Gehäuse 2 zu durchbrechen. Dort, also im Innern des zylinderförmigen Gehäuseabschnittes 12, sind auf der Antriebswelle 9 mit dieser drehfest verbunden Mitnehmermagnete 13 angeordnet, die mit korrespondierenden, hier nicht näher dargestellten Koppelmagneten, die in dem Aufschäumelement 4 der zentralen Öffnung zugewandt angeordnet sind, durch die Wand des Gehäuses 2 im Bereich des zylinderförmigen Gehäuseabschnittes 12 hindurch koppeln, um so das von dem Motor 8 erzeugte Drehmoment von der Antriebswelle 9 auf das Aufschäumelement 4 zu übertragen und dieses zur Rotation um den zylinderförmigen Gehäuseabschnitt 12 anzutreiben. An seinem äußeren Rand weist das Aufschäumelement 4 eine im Kreis geführte Spirale 14 aus einem drahtförmigen Material, insbesondere einem Metalldraht, auf, die der Verwirbelung der aufzuschäumenden Milch mit Luft dient.

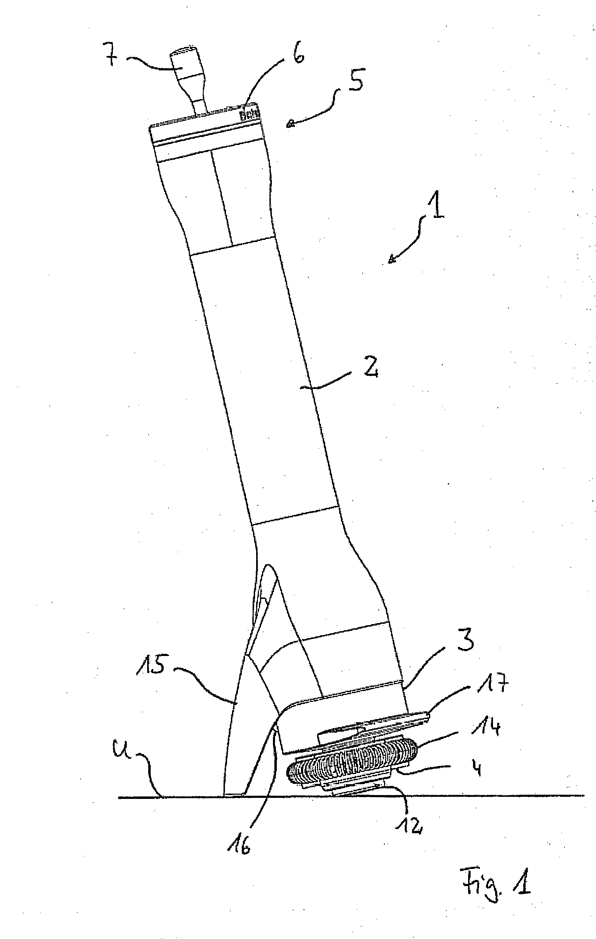

An dem Gehäuse 2 in dessen mittleren Abschnitt einstückig angeformt sind zwei Stützstreben 15, die Stützmittel zum Abstellen der Vorrichtung 1 bilden. Ein weiteres Stützmittel zum Abstellen der Vorrichtung wird durch einen Randbereich des zylinderförmigen Gehäuseabschnittes 12 gebildet. In den Figuren 1 und 2 ist veranschaulicht der Untergrund U mit dargestellt, auf dem die Vorrichtung 1 gestützt durch die Stützstreben 15 sowie den ein weiteres Stützmittel darstellenden Abschnitt des Gehäuses in dem zylinderförmigen Gehäuseabschnitt 12 in einer solchen Weise abgestellt ist, dass die Rotationsachse 10 um die das Aufschäumelement 4 angetrieben durch den Motor 8 gedreht wird gegenüber der Vertikalen (die hier senkrecht zum Untergrund U zu verstehen ist) verkippt ist. Der Winkel, der hier zwischen der Rotationsachse 10 und der Vertikalen eingeschlossen wird, beträgt in diesem Ausführungsbeispiel etwa 13°.

Im Bereich des unteren Gehäuseendes 3 ist ein Temperatursensor 16 zu erkennen, der mit einer Sensorspitze außerhalb des Gehäuses in dem Bereich angeordnet ist, in dem sich bei Einsatz der Vorrichtung 1 die Milch befindet. Dieser Temperatursensor 16 erfasst die Temperatur der Milch und ist (hier nicht näher dargestellt) mit einer Einrichtung zur Anzeige der Temperatur gekoppelt, die nicht lediglich eine Anzeige der tatsächlichen Temperatur nach °C oder einer anderen Temperaturskala sein kann, sondern vielmehr in einem einfachen akustischen und/oder optischen Signalgerät bestehen kann, welches ein Signal abgibt, sobald der Temperatursensor 16 eine einen bestimmten voreingestellten Temperaturwert übersteigende Temperatur misst.

Schließlich ist in einem den Stützstreben 15 gegenüberliegenden Bereich des unteren Gehäuseendes 3 an dem Gehäuse 2 ein kragenförmiger Vorsprung angeformt, der über den Umfang des Aufschäumelementes 14 herausragt.

Aus der gezeigten Darstellung ergibt sich die Besonderheit der erfindungsgemäßen Vorrichtung 1, die nämlich zum Gebrauch auf den Stützmitteln in Form der Stützstreben 15 und der auf dem Untergrund U aufliegenden Kante des zylinderförmigen Gehäuseabschnittes 12 so abgestellt werden kann, dass das Aufschäumelement 14 frei rotiert, wobei die Rotationsachse 10 gegenüber der Vertikalen geneigt verläuft. Auf diese Weise wird durch die Schrägstellung gegenüber dem Boden eines Gefäßes, in dem sich die erfindungsgemäße Vorrichtung 1 befindet, beim Aufschäumen der Milch zugleich eine die Milch in dem Gefäß umwälzende Strömung erzeugt, die nicht nur ein besonders gleichmäßiges und mit gutem Schäumergebnis erfolgendes Aufschäumen der Milch gewährleistet, sondern zugleich ein Durchmengen dieser Flüssigkeit. Dies ist insbesondere dann von Vorteil, wenn die erfindungsgemäße Vorrichtung, wie in einem besonders bevorzugten Einsatzfalle vorgesehen, in dem Gefäß mit Milch bereits während des Erwärmvorganges abgestellt und der Motor durch Betätigen des Kippschalters 7 eingeschaltet wird. Denn dann besorgt die erfindungsgemäße Vorrichtung nicht allein das Aufschäumen der Milch, sondern zugleich ein stetes Umwälzen der Milch, welches ein Ansetzen bzw. Anbrennen der zu erhitzenden Milch in dem Gefäß verhindert. Durch den kragenförmigen Vorsprung 17 wird verhindert, dass das Aufschäumelement 14 bei nah am Rand des Gefäßes abgestellter Vorrichtung 1 an diesem Rand anstößt und in seiner Rotation gehindert wird.

Dadurch, dass das Gehäuse 2 langgestreckt verläuft, ragt dieses mit einem ausreichend großen Abschnitt aus der in dem Gefäß befindlichen Milch heraus, sodass nach dem Aufschäumvorgang eine Bedienperson die Vorrichtung an dem Gehäuse 2 einfach und sicher ergreifen kann. Darüber hinaus wird - gefördert durch die Materialwahl des Gehäuses 2 als Metall - eine sichere Ableitung der von der erwärmten Milch aufgenommenen Wärme an die Umgebungsluft ermöglicht.

### Bezugszeichenliste

- 1: Vorrichtung zum Aufschäumen von Milch
- 2: Gehäuse
- 3: erstes Gehäuseende
- 4: Aufschäumelement
- 5: zweites Gehäuseende
- 6: Verschlusskappe
- 7: Kippschalter
- 8: Motor
- 9: Antriebswelle
- 10: Rotationsachse
- 11: Batterie, Akkumulator
- 12: zylinderförmiger Gehäuseabschnitt
- 13: Mitnehmermagnet
- 14: Spirale
- 15: Stützstrebe
- 16: Temperatursensor
- 17: kragenförmiger Vorsprung
- U: Untergrund

## Patentansprüche

1. Vorrichtung zum Aufschäumen von Milch mit einem in einem Gehäuse (2) angeordneten Motor (8) zum rotierenden Antreiben einer Antriebswelle (9) und einem an einem ersten Gehäuseende (3) außerhalb des Gehäuses (2) angeordneten, mit der Antriebswelle (9) gekoppelten und von dieser um eine Rotationsachse (10) in Rotation bringbaren Aufschäumelement (4), **gekennzeichnet durch** an dem Gehäuse (2) angeordnete Stützmittel (12, 15), auf denen die Vorrichtung (1) mit in einer unteren Stellung befindlichem ersten Gehäuseende (3) in einer solchen Position aufstellbar ist, in der das Aufschäumelement (4) frei rotieren kann und in der die Rotationsachse (10) zur Vertikalen geneigt verläuft.

2. Vorrichtung nach Anspruch 1, **dadurch gekennzeichnet, dass** in der auf den Stützmitteln (12, 15) aufgestellten Position die Neigung der Rotationsachse (10) gegenüber der Vertikalen kleiner oder gleich 45° ist.

3. Vorrichtung nach Anspruch 2, **dadurch gekennzeichnet, dass** in der auf den Stützmitteln (12, 15) aufgestellten Position die Neigung der Rotationsachse (10) gegenüber der Vertikalen in einem Bereich zwischen 5° und 20°, insbesondere zwischen 10° und 15°, bevorzugt etwa 13° beträgt.

4. Vorrichtung nach einem der vorhergehenden Ansprüche **gekennzeichnet durch** ein langgestrecktes Gehäuse (2) mit im Wesentlichen kreisförmigem Querschnitt.

5. Vorrichtung nach Anspruch 4, **gekennzeichnet durch** eine Abmessung des Gehäuses (2) in Richtung seiner Längserstreckung von 10 bis 20 cm.

6. Vorrichtung nach einem der vorhergehenden Ansprüche, **dadurch gekennzeichnet, dass** in dem Gehäuse (2) zusätzlich zu dem Motor (8) eine Energiequelle (11) für die Energieversorgung des Motors (8) angeordnet ist, vorzugsweise eine oder mehrere Batterie(n) bzw. ein oder mehrere Akkumulator(en).

7. Vorrichtung nach einem der vorhergehenden Ansprüche, **dadurch gekennzeichnet, dass** das Gehäuse (2) an dem ersten Gehäuseende (3) einen zylinderförmigen Gehäuseabschnitt (12) aufweist, in welchem im Gehäuseinneren die Antriebswelle (9) verläuft und in dem auf der Antriebswelle (9) Mitnehmermagnete (13) festgelegt sind, und dass das Aufschäumelement (4) eine kreisförmige Aussparung zum Aufsetzen auf den zylinderförmigen Gehäuseabschnitt (12) und in der kreisförmigen Aussparung Koppelmagnete zum magnetischen Koppeln an die Mitnehmermagnete (13) aufweist.

8. Vorrichtung nach einem der vorhergehenden Ansprüche, **dadurch gekennzeichnet, dass** die Stützmittel (12, 15) zwei um die Rotationsachse (10) versetzt angeordnete, an dem Gehäuse (2) angeformte Stützstreben (15) beinhaltet.

9. Vorrichtung nach den Ansprüchen 7 und 8, **dadurch gekennzeichnet, dass** die Stützmittel (12, 15) ferner einen äußeren Abschnitt des zylinderförmigen Gehäuseabschnittes (12) umfassen.

10. Vorrichtung nach einem der Ansprüche 8 oder 9, **dadurch gekennzeichnet, dass** die Stützstreben (15) um die Rotationsachse (10) um einen Winkel von 45° bis 75° versetzt sind.

11. Vorrichtung nach Anspruch 10, **gekennzeichnet durch** einen jedenfalls in dem dem Winkelabschnitt von 45° bis 75°, um den die Stützstreben (15) um die Rotationsachse (10) versetzt sind, gegenüberliegenden Bereich an dem Gehäuse (2) im Bereich des ersten Gehäuseendes (3) angeordneten, kragenartigen Vorsprung (17), der über den äußeren Rand des Aufschäumelementes (4) hinausragt.

12. Vorrichtung nach einem der vorhergehenden Ansprüche, **dadurch gekennzeichnet, dass** das Aufschäumelement (4) eine in einer im Wesentlichen senkrecht zu der Rotationsachse liegenden Ebene kreisförmig angeordnete Spirale (14) aufweist.

13. Vorrichtung nach einem der vorhergehenden Ansprüche, **gekennzeichnet, durch** einen an dem ersten Gehäuseende (3) angeordneten Temperatursensor (16) sowie **durch** Mittel zum Anzeigen einer mit dem Temperatursensor (16) gemessenen Temperatur.

14. Vorrichtung nach einem der vorhergehenden Ansprüche, **gekennzeichnet durch** ein Gehäuse (2) aus Metall oder einer Metallegierung, insbesondere aus, vorzugsweise verchromten, Zink.

15. Verfahren zum Aufschäumen von Milch, bei dem eine Vorrichtung nach einem der vorhergehenden Ansprüche mit in einer unteren Stellung befindlichem ersten Gehäuseende auf den Stützmitteln auf einem Boden eines die aufzuschäumende Milch enthaltenden Gefäßes so aufgestellt wird, dass die Rotationsachse zur Vertikalen geneigt und schräg zu dem Boden des Gefäßes verläuft, und bei dem ferner zum Aufschäumen der Milch das Aufschäumelement in Rotation um die Rotationsachse versetzt wird.

## Claims

1. A device for foaming milk with a motor (8) provided in a housing (2) for driving into rotation a drive shaft (9) and a foaming element (4), provided on a first housing end (3) outside the housing (2), coupled with the drive shaft (9) and which can be brought into rotation about a rotation axis (10) from said shaft, **characterised by** support means (12, 15) provided on the housing (2), means on which the device (1) can be set with a first housing end (3) situated in a lower position, in such a position in which the foaming element (4) can rotate freely and in which the rotary axis (10) extends tilted with respect to the vertical.

2. The device according to claim 1, **characterised in that** the tilting of the rotary axis (1) is smaller than or equal to 45° with respect to the vertical, in the position set on the support means (12, 15).

3. The device according to claim 2, **characterised in that** in the position set on the support means (12, 15) the tilting of the rotation axis (10) ranges with respect to the vertical in a region between 5° and 20°, in particular between 10° and 15°, preferably about 13°.

4. The device according to one of the preceding claims, **characterised by** a housing (2) stretched longitudinally with a cross-section substantially circular.

5. The device according to claim 4, **characterised by** a dimension of the housing (2) in the direction of its longitudinal extension of 10 to 20 cm.

6. The device according to one of the preceding claims, **characterised in that** in the housing (2) in addition to the motor, an energy source (11) is provided for the energy supply of the motor (8), preferably one or several batteries or one or several accumulators.

7. The device according to one of the preceding claims, **characterised in that** the housing (2) has a cylindrical housing section (12) on the first housing end (3) in which the drive shaft (9) runs inside the housing and in which exciter magnets (13) are set on the drive shaft (9) and that the foaming element (4) includes on the one hand a circular recess for setting on the cylindrical housing section (12) and on the other hand coupling magnets in the circular recess for magnetic coupling to the exciter magnets (13).

8. The device according to one of the preceding claims, **characterised in that** the support means (12, 15) contains two support struts (15), integral with the housing (2), offset around the rotation axis (10).

9. The device according to claims 7 and 8, **characterised in that** the support means (12, 15) moreover contain an external section of the circular housing section (12).

10. The device according to one of the claims 8 or 9, **characterised in that** the support struts (15) are offset around the rotation axis (10) by an angle of 45° to 75°.

11. The device according to claim 10, **characterised by** a collar-like protrusion (17), arranged in the region of the first housing end (3), in opposite to the region on the housing (2), angular section of 45° to 75° with respect to which the support struts (15) are offset around the rotation axis (10), a protrusion extending over the external edge of the foaming element (4).

12. The device according to one of the preceding claims, **characterised in that** the foaming element (4) includes a circular spiral (14) provided on a plane substantially vertical to the rotation axis.

13. The device according to one of the preceding claims, **characterised by** a temperature sensor (16) provided on the first housing end (3) as well as means for displaying a temperature measured with the temperature sensor (16).

14. The device according to one of the preceding claims, **characterised by** a housing (2) made of metal or a metal alloy, in particular zinc, preferably chromium-plated zinc.

15. A method for foaming milk, in which a device according to any of the preceding claims having a first housing end situated in a lower position, is mounted on the support means on the bottom of a vessel containing the milk to be foamed, in such a way that the rotary axis is tilted with respect to the vertical and obliquely to the bottom of the vessel, and in which moreover the foaming element is offset in rotation around the rotation axis for foaming milk.

## Revendications

1. Dispositif de moussage de lait comprenant un moteur (8) disposé dans un carter (2) pour l'entraînement rotatif d'un arbre d'entraînement (9) et un élément de moussage (4) disposé dans une première extrémité de carter (3) à l'extérieur du carter (2), couplé à l'arbre d'entraînement (9) et pouvant être mis en rotation autour d'un axe de rotation (10) à partir dudit arbre, **caractérisé par** des moyens d'appui (12, 15) disposés au niveau du carter (2), moyens sur lesquels le dispositif (1) peut être installé dans une telle position, avec une première extrémité de carter (3) située dans une position inférieure, position dans laquelle l'élément de moussage (4) peut tourner librement et dans laquelle l'axe de rotation (10) est incliné à la verticale.

2. Dispositif selon la revendication 1, **caractérisé en ce que** l'inclinaison de l'axe de rotation (10) par rapport à la verticale est inférieure ou égale à 45°, dans la position calée sur les moyens d'appui (12, 15).

3. Dispositif selon la revendication 2, **caractérisé en ce que** l'inclinaison de l'axe de rotation (10) est comprise dans une fourchette de 5 à 20°, en particulier de 10 à 15°, de préférence égale à 13° environ, par rapport à la verticale dans la position calée sur les moyens d'appui (12, 15).

4. Dispositif selon l'une des revendications précédentes **caractérisé par** un carter (2) étiré longitudinalement avec une section transversale sensiblement circulaire.

5. Dispositif selon la revendication 4 **caractérisé par** une dimension du carter (2) de 10 à 20 cm dans la direction de son étendue longitudinale.

6. Dispositif selon l'une quelconque des revendications précédentes, **caractérisé en ce qu'**une source d'énergie du moteur (8) est prévue dans le carter (2) en plus du moteur (8), de préférence une ou plusieurs batteries ou un ou plusieurs accumulateurs.

7. Dispositif selon l'une quelconque des revendications précédentes, **caractérisé en ce que** le carter (2) présente une section de carter cylindrique (12) au niveau de la première extrémité de carter (3), section dans laquelle arbre d'entraînement (9) circule à l'intérieur du carter et dans laquelle des aimants d'entraîneur (13) sont fixés sur arbre d'entraînement (9) et que l'élément de moussage (4) présente d'une part un évidement circulaire pour être posé sur la section de carter cylindrique (12) et d'autre part des aimants d'accouplement pour accouplement magnétique avec les aimants d'entraîneur (13) dans l'évidement circulaire.

8. Dispositif selon l'une quelconque des revendications précédentes, **caractérisé en ce que** les moyens d'appui (12, 15) comportent deux barres d'appui (15) solidaires du carter (2), décalées par rapport à l'axe de rotation (10).

9. Dispositif selon les revendications 7 et 8, **caractérisé en ce que** les moyens d'appui (12, 15) comprennent en outre une section externe de la section de carter cylindrique (12).

10. Dispositif selon l'une des revendications 8 ou 9, **caractérisé en ce que** les barres d'appui (15) sont décalées d'un angle de 45° à 75° par rapport à l'axe de rotation (10).

11. Dispositif selon la revendication 10 **caractérisé par** une saillie (17) en forme de collerette, disposée dans la zone de la première extrémité de carter (3), dans la zone du carter (2) opposé à la section angulaire de 45° à 75°, section par rapport à laquelle sont décalées les barres d'appui (15) autour de l'axe de rotation (10), saillie dépassant du bord externe de l'élément de moussage (4).

12. Dispositif selon l'une quelconque des revendications précédentes, **caractérisé en ce que** l'élément de moussage (4) présente une spirale (14) disposée circulaire et dans un plan sensiblement à la verticale de l'axe de rotation.

13. Dispositif selon l'une des revendications précédentes, **caractérisé par** un capteur de température (16) prévu au niveau de la première extrémité de carter (3) de même que des moyens d'affichage d'une température mesurée à l'aide du capteur de température (16).

14. Dispositif selon l'une des revendications précédentes, **caractérisé par** un carter (2) en métal ou alliage de métal, en particulier de zinc, de préférence chromé.

15. Procédé de moussage de lait, dans lequel un dispositif selon l'une quelconque des revendications précédentes est calé sur les moyens d'appui avec une première extrémité de carter dans une position inférieure, au fond d'un récipient contenant le lait à mousser, de telle sorte que l'axe de rotation est incliné par rapport à la verticale et en biais par rapport au fond du récipient et où l'élément de moussage est décalé pour mousser le lait, en rotation autour de l'axe de rotation.
